Europäisches Patentamt

European Patent Office

Office européen des brevets

(11) Publication number: **0 442 633 A1**

# EUROPEAN PATENT APPLICATION

(21) Application number: 91300712.6

(22) Date of filing: 30.01.91

(51) Int. Cl.5: **C08L 25/08**, C08L 55/02, //(C08L25/08,59:02),(C08L55/02, 59:02)

(30) Priority: 02.02.90 US 474415

(43) Date of publication of application:
21.08.91 Bulletin 91/34

(84) Designated Contracting States:
BE DE ES FR GB IT NL SE

(71) Applicant: THE DOW CHEMICAL COMPANY
2030 Dow Center Abbott Road
Midland, MI 48640(US)

(72) Inventor: Guest, Martin J.
Fahrenheitlaan 10
NL-4532 JR Terneuzen(NL)
Inventor: Van der Berghen, P.F.M.
Achtereindstr. 23
NL-4569 AW Graauw(NL)
Inventor: Aerts, Ludo M.
Weehaagstraat 35
B-9108 Lokeren(BE)
Inventor: Gkogkidis, Antonios
Voltastraat 26
NL-4532 LH Terneuzen(NL)
Inventor: De Bert, Abraham
M. Salzmannlaan 5
B-9060 Zelzate(BE)

(74) Representative: Raynor, John et al
W.H. Beck, Greener & Co 7 Stone Buildings
Lincoln's Inn
London WC2A 3SZ(GB)

(54) Styrenic copolymer/polyacetal blend compositions.

(57) Thermoplastic polymer blends comprising a major proportion by weight of certain monovinylidene aromatic copolymers and a minor proportion by weight of an acetal polymer have good processability and a beneficial combination of physical and chemical properties including thermal/dimensional stability, chemical resistance and creep resistance. Said polymer blends are suitable for use in the preparation of a variety of molded utilitarian articles having good appearance and paintability.

## STYRENIC COPOLYMER/POLYACETAL BLEND COMPOSITIONS

The present invention pertains generally to thermoplastic polymer blends comprising a monovinylidene aromatic copolymer in combination with an acetal polymer and, more particularly, to blends of the indicated type wherein said monovinylidene aromatic copolymer constitutes a major proportion by weight thereof. In one particularly preferred embodiment, the monovinylidene aromatic copolymer is a rubber-modified monovinylidene aromatic copolymer having from 1 to 40 weight percent of dispersed rubber particles contained therein.

Blends of various and varying types of polymeric materials have been suggested over the years in a variety of prior art references. Of these, the prior art references utilizing acetal resins as blend components generally illustrate compositions in which the acetal resin forms the major or continuous phase, presumably because of large shrinkage and associated interfacial stress build-up occurring upon cooling from the melt. For example, U.S. Patent 4.665,126 to Kusumgar et al. discloses certain polymeric molding compositions containing a predominant amount (for example from 60 to 95 weight percent) of an acetal polymer ingredient in combination with relatively lesser amounts (for example from 4 to 30 and from 1 to 10 weight percent, respectively) of a thermoplastic polyurethane (TPU) and a multiphase composite interpolymer such as, for example, a butadiene-based, rubber-modified styrene/methyl- methacrylate polymer. Such Kusumgar et al. formulations are said to have improved impact strength relative to that of the acetal polymer per se and relative to that of comparable two component acetal/TPU or acetal/multiphase composite interpolymer blends and to be useful in various molding applications.

U.S. Patent 4,694,042 to McKee et al. pertains to thermoplastic molding polymer blends containing a minor proportion (that is from 5 to 50 parts) by volume of a partially or completely crystalline polymer such as nylon, polyacetal, etc. wherein said crystalline polymer, even though employed in minor volumetric proportion, is nevertheless considered to form a coherent phase and wherein the second, major proportion component forms a dispersed phase therein. Within the indicated McKee et al. blends, said major proportion (that is from 50 to 95 parts by volume) component consists of one or more crosslinked, emulsion-polymerized elastomeric polymers such as, for example, butadiene or acrylate rubber-based graft copolymers containing either from 10 to 50 weight percent of a shell having a glass transition temperature of less than -10°C or a substantially lesser amount of a hard polymer shell of styrene, methylmethacrylate or styrene acrylonitrile copolymer. Acetal resin-based compositions are not evident in the working examples.

British Patent 1,311,305 discloses thermoplastic molding compositions composed of a mixture of from 50 to 99 weight percent of an acetal polymer and from 1 to 50 weight percent of a butadiene or acrylate rubber-modified, two-phase polymer mixture. Such thermoplastic molding compositions are described as having considerably improved impact strength relative to that of the acetal polymer per se. Preferred embodiments of this reference utilize 80 to 95 weight percent of the acetal polymer component.

U.S. Patent 4,639,488 to Schuette et al. discloses impact resistant polyacetal-based molding materials containing from 30 to 95 weight percent of an acetal polymer and from 5 to 70 weight percent of an emulsion polymerized elastomeric graft copolymer composed, on a graft copolymer weight basis, of from 60 to 90 weight percent of a butadiene-based core (or "grafting base") and from 10 to 40 weight percent of a grafted shell of a styrene and/or methylmethacrylate-based polymer or copolymer. Such molding materials are said to have high impact strength at low temperatures, to exhibit good thermal stability and to resist discoloration in the presence of light.

Another publication concerned with blends of polyacetal resins and polystyrene resins is Japanese Kokai No. 64-38463, published February 8, 1989. Such publication is essentially concerned with polyacetal/polystyrene blends wherein the polyacetal constitutes the major portion by weight thereof and requires in all events that the ratio of the polyacetal melt flow rate (MFR, ASTM D-11238 at 190°C and 2160g) to the polystyrene melt flow rate (ASTM D-16238 at 200°C and 5000g) be from 5:1 to 100:1. According to such publication, excellent surface appearance is obtained by operating within, and only by operating within, the indicated range of polyacetal: polystyrene melt flow rate ratios.

U.S. Patent 4,296,216 to Sakano et al. discloses thermoplastic resin compositions comprising a polyamide or polyacetal resin in combination with an aromatic monovinyl compound/vinyl cyanide copolymer and a conjugated diene rubber/vinyl cyanide graft copolymer. In accordance with the teachings of this reference, the polyamide or polyacetal resin content within said compositions must not exceed 10 weight percent. Otherwise, lowered impact strength and delamination in molded articles is said to result.

There remains a continuing need to provide engineering thermoplastic materials having a balance of processability, good aesthetics with no pearlescence and having alternative, advantageous property profiles such as the mechanical strength, creep and chemical resistance and practical toughness as provided by the present invention.

In accordance with the foregoing, certain polymer blend compositions have now been developed having an advantageous combination of properties of the sort set forth above. Thus, the present invention, in one of its aspects, is a polymer blend composition characterized in that it comprises, on the basis of a total of 100 parts by weight of the stated polymer ingredients:

A. from 50 to 85 parts by weight of a monovinylidene aromatic copolymer ingredient selected from the group consisting of

1. non-rubber-modified monovinylidene aromatic copolymers comprising, in polymerized form and on an aromatic copolymer ingredient weight basis, from 55 to 99 weight percent of one or more monovinylidene aromatic monomers and from 1 to 45 weight percent of one or more relatively polar comonomer ingredients; and

2. rubber-modified monovinylidene aromatic copolymers comprising, in polymerized form and on a rubber-modified copolymer weight basis from 60 to 99 weight percent of one or more monovinylidene aromatic copolymer as described in item A. 1. above and from 1 to 40 weight percent of dispersed particles of a rubbery polymer having a glass transition temperature of $0^\circ$ C or lower;

B. from 15 to 50 parts by weight of an acetal homopolymer or copolymer ingredient which can be either linear or branched and which can be employed either singly or in combination.

In one of its especially preferred aspects or embodiments, the aforementioned polymer blend composition employs as its monovinylidene aromatic copolymer ingredient a rubber-modified monovinylidene aromatic copolymer comprising, on a rubber-modified copolymer weight basis, from 2 to 35 weight percent of dispersed particles of a rubbery polymer selected from the group consisting of homopolymers of a 1,3-conjugated alkadiene monomer and copolymers of from 60 to 99 weight percent of a 1,3-conjugated alkadiene monomer with from 1 to 40 weight percent of a monoethylenically unsaturated monomer.

In another especially preferred embodiment, the polymer blend compositions hereof further comprise from 0.01 to 5 weight percent, on a total composition weight basis, of an antioxidant and/or an ultraviolet light (U.V.) stabilizer ingredient selected from the group consisting of (a) light stabilizers comprising sterically hindered amines and/or ester functional groups such as, for example, bis (2,2,6,6-tetramethyl-4-piperidyl) sebacate (commercially available as TINUVIN® 770 from Ciba Geigy); (b) light stabilizers comprising substituted benzo-triazoles such as, for example TINUVIN® P and TINUVIN® 234, (also commerically available from Ciba Geigy); and (c) antioxidant additives comprising p-hydroxyphenyl-propionic acid ester, such as, for example, tri-ethyleneglycol-bis-3(3-tert-butyl-4-hydroxy-5-methylphenyl) propionate which is available from Ciba Geigy as IRGANOX® 245. Surprisingly, the presence of the indicated stabilizer/antioxidant ingredients serves to substantially increase the impact strength of the subject polymer compositions.

In yet another especially preferred embodiment hereof, the subject polymer blend compositions further comprise, on a total composition weight basis, from 5 to 80 weight percent of a particulate or fibrous inorganic filler or reinforcing ingredient such as, for example, fibers of carbon, graphite, glass and mica. Other mineral fibers such as fibers of titanium oxide or potassium titanate can also be, but are less preferably, employed. The most preferred fiber for use herein is glass fiber. Such filled or reinforced polymer blends (particularly when said blends employ fiberglass as the reinforcing agent at levels of from 15 to 30 or 40 weight percent thereof) have been observed to exhibit unexpectedly enhanced thermal (for example heat distortion) performance.

The indicated polymer blends have a highly advantageous combination of physical, chemical and aesthetic properties including chemical resistance, creep resistance, impact and tensile strength and thermo/dimensional stability. Particularly noteworthy and surprising is the fact that the subject polymer blends have been observed to exhibit higher creep modulus values than that of either of their individual blend components.

As has been noted above, the polymer blend compositions hereof are predominantly composed of a monovinylidene aromatic copolymer ingredient which can either be rubber-modified or non-rubber-modified. In either case, suitable monovinylidene aromatic monomer constituents include styrene, alkyl substituted styrenes such as alpha-alkyl-styrene (for example alpha-methylstyrene, alpha-ethylstyrene etc.), various ring-substituted styrenes such as para-methylstyrene, orthoethylstyrene, 2,4-dimethylstyrene, etc., ring-substituted halo-styrenes such as chloro-styrene, 2,4-dichloro-styrene, etc. and the like. Such monovinylidene aromatic monomer (especially styrene) typically constitutes from 55 to 99 weight percent of said monovinylidene aromatic copolymer and preferably constitutes from 60 to 95 (more preferably from 65 to 90) weight percent thereof.

Suitable relatively polar comonomer ingredients for use as the minor constituent in (that is constituting from 1 to 45 weight percent of) the indicated monovinylidene aromatic copolymers include ethylenically unsaturated nitriles such as acrylonitrile, methacrylonitrile, ethacrylonitrile, etc.; ethylenically unsaturated anhydrides such as maleic anhydride; ethylenically unsaturated amides such as acrylamide, methacrylamide, etc.; esters (especially lower, for example $C_1$-$C_6$, alkyl esters) of ethylenically unsaturated carboxylic acids such as methyl methacrylate, ethylacrylate, hydroxyethylacrylate, n-butyl acrylate or methacrylate, 2-ethyl-hexylacrylate, etc.; ethylenically unsaturated dicarboxylic acid imides such as N-alkyl or N-aryl maleimides such as N-phenyl maleimide, etc. Preferably said relatively polar comonomers or mixtures thereof constitute from 5 to 40 (more preferably from 10 to 35) weight percent of the indicated monovinylidene aromatic copolymer.

Typically, the aforementioned monovinylidene aromatic copolymer is a normally solid, non-elastomeric material having a glass transition temperature above 25° C.

Especially preferred polymer blend compositions hereof are those wherein the monovinylidene aromatic copolymer is rubber modified and comprises on a total rubber modified-copolymer weight basis from 1 to 40 (preferably from 2 to 35, more preferably from 3 to 30 and most preferably from 5 to 25) weight percent of dispersed particles of a rubbery polymer having a glass transition temperature of 0° C or lower. Preferred rubbery polymers for use herein are those having a glass transition temperature of -20° C or lower. Examples of suitable such rubbery polymers include homopolymers of 1,3-conjugated alkadiene monomers; copolymers of from 60 to 99 weight percent of said 1,3-conjugated alkadienes with from 1 to 40 weight percent of a monoethylenically unsaturated monomer such as, for example, monovinylidene aromatic monomers (for example styrene, etc.) and ethylenically unsaturated nitriles such as acrylonitrile, methacrylonitrile, etc.; ethylene/propylene copolymer rubbers and rubbery ethylene/propylene/non-conjugated diene copolymers. Especially preferred rubbery copolymers for use herein include polymers composed of from 60 to 100 weight percent of 1,3-butadiene and from 0 to 40 weight percent of styrene or acrylonitrile.

One particular class of rubber-modified monovinylidene aromatic copolymer ingredients of interest for use herein are graft copolymer compositions wherein the above-discussed rubbery polymer particles serve as substrates having grafted thereto a portion of the above-described monovinylidene aromatic copolymer as a grafted superstrate and wherein the remainder of said monovinylidene aromatic copolymer constitutes a continuous matrix phase in which the indicated grafted rubbery particles are dispersed. In such instances, the matrix phase typically constitutes from 40 to 95 (preferably from 60 to 95) percent of the overall weight of the indicated rubber-modified compositions and the grafted copolymer constituents constitutes the remainder thereof. Typically the grafted copolymer constituent will have a grafted superstrate to graftable rubber substrate ratio (that is a graft to rubber or "G/R" ratio) of from 0.1:1 to 1:1 (preferably from 0.35:1 to 0.45:1). Typically, the indicated rubber-modified monovinylidene aromatic copolymer ingredients employed herein will have a melt flow rate within the range of from 0.5 to 12 (preferably from 1 to 10) grams per 10 minutes as determined pursuant to ASTM D-1238 at 230° C and 3.8 kg.

The aforementioned rubber-modified monovinylidene aromatic graft copolymer hereof can suitably be prepared in any known manner by free radical polymerization of the selected comonomer materials in the presence of the modifying rubber material. Suitable techniques thus include conventional mass, solution, suspension or emulsion polymerization processes. If emulsion polymerized graft copolymers are to be employed, care should be taken to remove or neutralize residual acid moieties. Otherwise decomposition of the acetal polymer component can result. Especially preferred for use herein are rubber-modified monovinylidene aromatic graft copolymers prepared via mass or mass/suspension polymerization techniques.

In general, mass polymerization involves polymerizing a solution of the rubber and monomer(s) at conditions sufficient to form discrete rubber particles of the desired particle size dispersed throughout the polymerized monomer. The polymerization is advantageously conducted in one or more substantially linear stratified flow or so-called plug-flow reactors such as described in U.S. Patent No. 2,727,884 which may or may not comprise recirculation of a portion of the partially polymerized product or in a stirred tank reactor wherein the contents of the reactor are essentially uniform throughout.

The polymerization is advantageously conducted in an organic liquid reaction diluent such as aromatic or inertly substituted aromatic hydrocarbons (for example benzene or toluene) and in the presence of a free-radical initiator such as the peroxide initiators, (for example dibenzoyl peroxide or 1,1-bis-tertiary butylperoxycyclohexane). In general, the initiator will be employed in an amount from 100 to 5000 weight parts per million weight parts of the monomers employed. The organic liquid reaction diluent is generally employed to control the viscosity of the polymerization mixture and is generally employed in an amount from 2 to 20 weight percent based on the total weight of the rubber, monomer and diluent. The polymerization mixture can further contain other adducts such as a plasticizer or lubricant (for example mineral oil); and antioxidant (for example an alkylated phenol such as di-tert-butyl-p-cresol); a polymerization aid (for example a chain transfer agent such as an alkyl mercaptan) or a mold release agent, (for example zinc stearate). Temperatures at which polymerization is normally conducted are dependent on the specific components employed but will generally vary from 60° to 190° C.

In the preparation of the rubber-reinforced polymer resin, the mass polymerization can be continued to the desired completion and then treated to remove any unreacted monomer such as by flashing off the monomer and other volatiles at an elevated temperature under vacuum.

Mass/suspension polymerization involves initially mass polymerizing the monomer/rubber mixture and, following phase inversion (that is the conversion of the polymer from a discontinuous phase dispersed in a continuous phase of the rubber solution through the point where there is no distinct continuous or discontinuous phase in the polymerization mixture to continuous polymer phase having the rubber dispersed therethrough) and subsequent size stabilization of the rubber particles, suspending the partially polymerized product, with or without additional monomer(s), in an aqueous medium which generally contains a polymerization initiator. Subsequently, polymerization is completed using suspension polymerization techniques.

As has been noted, the indicated monovinylidene aromatic copolymer ingredient constitutes the major proportion (that is from 50 to 85 weight percent) of the polymer blend compositions hereof. Preferably, said monovinylidene aromatic copolymer is employed in amounts corresponding to from 55 to 85, (more preferably from 60 to 85 and most preferably from 65 to 85) parts by weight per 100 parts of the combined or total weight of the selected monovinylidene aromatic copolymer and acetal homopolymer or copolymer ingredient.

The acetal (sometimes termed polyoxymethylene) resin can be any of those commonly known in the art or commerically available. Thus, the acetal can either be a linear or branched, copolymer or homopolymer resin or mixtures of these. Copolymers can contain one or more comonomers such as those generally used in preparing acetal resins. Comonomers more commonly used include alkylene oxides of 2 to 12 carbon atoms, typically in an amount constituting less than 20 weight percent of said acetal resin ingredient. Polyoxymethylenes which contain from 0.5 to 10 weight percent, in particular from 1 to 5 weight percent of ethylene oxide are particularly important commercially and are especially preferred for use herein. As a general rule, the available acetal resins have thermally stable terminal groups, such as ester or ether groups, for example acetate or methoxy groups. The polyoxymethylenes have, in general, a molecular weight of from 10,000 to 100,000. As an alternative to molecular weight, melt flow rate (MFR) is commonly used to characterize resins, and those with higher molecular weights have lower melt flow rates. Preferred acetal resins for use in the compositions of the present invention are those which have MFRs of 0.1 to 60 grams/10 minutes, more preferably 0.5 to 30 grams/10 minutes and especially from 0.5 to 5 or 10 grams/10 minutes as determined at 190° C and 2.16 kg. If the MFR is too high, the melt viscosity of the acetal will be too low and it will be difficult to achieve sufficient intimate mixing of components at appropriate shear rates. If the MFR is too low, the temperature for the compounding operation may become too high and degradation can result. As will be evident in the examples, and assuming all other parameters are equal, the lower the MFR, the higher the toughness of the compositions of the present invention.

As noted above, the acetal polymer ingredient of the subject polymer blend compositions constitutes a minor proportion by weight (that is from 15 to 50 weight percent) of said polymer blend compositions. Preferably, said acetal polymer is utilized in an amount corresponding to from 15 to 45, (especially from 15 to 40 and most preferably from 15 to 35) parts by weight per 100 parts by weight of the total or combined weight of the selected acetal polymer and monovinylidene aromatic copolymer ingredients.

The polymer blend compositions hereof are conveniently prepared by dry blending the individual polymer ingredients to be employed in particulate (for example pelletized) form and in the quantitative proportions desired in a given instance and thereafter melt compounding the particulate polymer mixture in accordance with known extrusion compounding techniques. In connection with the indicated melt compounding operation, it is generally preferred to conduct such operation at a temperature of not exceeding 240° C, especially at a melt temperature in the range of from 180 to 230° C.

Various optional additives may also be included in the polymer blend compositions hereof for different purposes as are well known in the art, including bisphenol-type, ester-type or hindered phenol-type additives and anti-oxidants as disclosed, for example, in U.S. Patent Nos. 3,103,499 and 3,240,753, amine and amidine as disclosed, for example, in U.S. Patent Nos. 3,313,767 and 3,314,918, nucleants, UV screens and absorbers, metal soaps, glass beads, talc, polymeric substances other than those critical to this invention such as additives commonly known as mold release agents, plasticizers, antistatic agents, etc. which are compatible with the blends and color pigments which are compatible with acetal polymers. However, the use of the mentioned additives is not considered to be necessary for the operability of present invention.

The polymer blend compositions hereof can also optionally include, and oftentimes do preferably include, additional thermoplastic polymer ingredients in combination with the above-described monovinylidene aromatic copolymer and acetal resin constituents. Thus, for example, it has been observed that the inclusion of a minor proportion (for example from 1 to 50 parts by weight per 100 parts by weight of the overall blend composition) of an elastomeric thermoplastic polyurethane (especially a polyester-based thermoplastic polyurethane elastomer) and/or a copolyester elastomer material can be especially beneficial in terms of substantially enhancing the impact resistance of the resulting polymer blend composition. Similarly, it has also been observed that certain advantageous property benefits can be obtained by additionally including a polycarbonate or polyester resin constituent within the subject monovinylidene aromatic copolymer/acetal resin blend compositions either with or without (but preferably with) the further inclusion of the aforementioned elastomeric thermoplastic polyurethane and/or copolyester elastomer ingredients.

With regard to the aforementioned optional additive materials, it is important to note that a surprising phenomenon has been discovered in the context of the subject polymer blends in that the addition of a minor amount (for example from 0.01 to 5, preferably from 0.05 to 1.5 and especially from 0.1 to 1.0 weight percent) of certain selected antioxidant and/or U.V. stabilizer ingredients has been found to unexpectedly also provide dramatically increased impact strength within the polymer blend compositions of concern. In particular, U.V. light stabilizers comprising sterically hindered amines and/or ester functional groups as well as substituted benzo-triazoles (for example TINUVIN® 770 and 234) and anitoxidants comprising p-hydroxyphenyl propionic acid esters (for example IRGANOX® 245) have been found to be effective in this regard. Especially preferred in this connection are compositions which employ from 0.1 to 0.5 weight percent of TINUVIN® 234 and/or from 0.1 to 1.0 weight percent of TINUVIN® 770 and particularly when one or both of the former are used in combination with from 0.1 to 0.5 weight percent of IRGANOX® 245.

The polymer blend compositions hereof preferably also contain a minor proportion (for example from 0.01 to 15 parts by weight per 100 parts by weight of the overall blend composition) of one or more oxirane or substituted oxirane-containing ingredients. In this regard, it can be noted that the inclusion of oxirane or substituted oxirane-containing ingredients has been found to substantially improve the color stability of the subject polymer blends during the melt processing (for example melt blending and/or injection molding) thereof and to thereby widen the processability window of such blends by allowing increased processing temperatures to be employed without encountering discoloration problems.

Oxirane or substituted oxirane-containing ingredients for use herein are preferably selected from epoxy-hydrocarbons, such as, for example mono- or diglycidyl ethers of aromatic or aliphatic alcohols, with bisphenol-A or substituted bisphenol-A, orthocresol and 1,6-hexanediol being preferred alcohols. Other preferred substituted oxirate-containing ingredients include epoxidised vegetable oils, preferably epoxidised soybean and epoxidised linseed oil. Other suitable, but somewhat less preferred oxirane-containing ingredients are based upon epoxidised alkyl fatty esters, epoxy acids, epoxy salts as well as other epoxy-group functionalised ingredients.

Another surprising phenomenon which has been observed in connection with the polymer blends hereof relates to the glass fiber reinforcement thereof. Specifically, it has been found that compounded fiberglass reinforced polymer blend compositions hereof (for example containing from 5 to 80 weight percent glass fiber on a total composition weight basis can have unexpectedly enhanced thermal stability characteristics (for example heat distortion temperatures) and also that said phenomenon is particularly pronounced and beneficial at fiberglass contents of from 15 to 60 (especially from 20 to 50) weight percent on a total composition weight basis and at acetal polymer to monovinylidene aromatic copolymer weight ratios of from 25:75 to 50:50.

The polymer blend compositions of the present invention have good processability characteristics and are suitable for use in a wide variety of injection molding applications. Such compositions are particularly useful in such applications wherein good thermal/dimensional stability, creep resistance and chemical resistance properties are required and have also been found to be paintable. Suitable exemplary end-use applications thus include automotive interior and exterior parts, tool casings, appliance housings and the like.

The present invention is further understood and illustrated by reference to the following examples thereof.

Examples 1 and 2

In these examples two polymer blend compositions are prepared, one (that is Example 1) containing 70 weight percent of an acrylonitrile/butadiene/styrene (ABS) resin and 30 weight percent of an acetal resin and the other (that is Example 2) containing 75 weight percent of said ABS resin and 25 weight percent of the acetal resin.

In preparing said polymer blend compositions, the indicated proportions of the individual resin ingredients in pelletized form are dry blended and are then melt compounded in an extruder at a temperature of from 210 to 220°C and pelletized. Subsequently, the pelletized polymer blend compositions are injected molded into test pieces (10x10x0.3cm plaques) and are subjected to dimensional stability testing at 125°C.

For comparative purposes, plaques are also made from the individual ABS and acetal resin components and are subjected to dimensional stability testing.

The results of said dimensional stability testing are presented in Table I.

## Table I

| Resin Sample | Change in Dimensions (Percent) | | | |
|---|---|---|---|---|
| | 1.5 hours at 125°C | | 5.5 hours at 125°C | |
| | Parallel | Perpendicular | Parallel | Perpendicular |
| Example 1 (70:30 ABS: Acetal) | 1.18 | 1.03 | 1.33 | 1.13 |
| Example 2 (75:25 ABS: Acetal) | 1.64 | 1.33 | 1.75 | 1.42 |
| Acetal[1] | less than 0.5 | less than 0.5 | - | - |
| ABS[2] | greater than 11 | greater than 2 | - | - |

1. Acetal = ULTRAFORM™ N2320 from BASF (MFR at 190°C and 2.16 Kg=9.0)

2. ABS = Mass polymerized ABS resin containing 12 weight percent polybutadiene rubber, 14 weight percent acrylonitrile and 74 weight percent styrene and having a melt flow rate of 3.3 (as determined pursuant to ASTM D-1238 at 230°C and 3.8 kg)and an average rubber particle size of 1.2 micron.

Example 3

In this example a 50:50 weight ratio ABS:Acetal polymer blend is prepared and is tested for its heat sag characteristics in accordance with ASTM D3769. The results are presented in Table II along with the corresponding results for the individual ABS and acetal resin ingredients. The ABS and Acetal resin materials employed are the same as those employed in Examples 1 and 2.

Table II

| Sample | Sag[1] (mm) |
|---|---|
| Example 3 (50:50 ABS:Acetal) | 3.75 |
| Acetal | 1.25 |
| ABS | greater than 15 |

1.  Sample = 3mm thickness and 12.5 mm wide.  Test conditions:  Test Bars supported horizontally, 100mm unsupported overhang.  One hour at 130°.

Example 4

In this example, a 50:50 ABS/Acetal blend composition is prepared and tested for chemical resistance relative to the individual blend components. The Acetal and ABS resins employed are the same as those in Examples 1 and 2. The results are presented in Table III.

Table III

| Sample | Chemical Resistance[1] | | | |
|---|---|---|---|---|
| | Tensile | | Elongation | |
| | Yield | Rupture | Yield | Rupture |
| Example 4 (50:50 ABS: Acetal) | -4 | -3 | 0 | -1 |
| ABS | S.D.* | S.D. | S.D. | S.D. |
| Acetal | -3 | -3 | +9 | +1 |

*S.D. = Severe Degradation.  Could not be tested.

1.  Change in Tensile and Elongation Properties one hour after immersion for 5 minutes in a solution of 42.5 percent isooctane, 42.5 percent toluene and 15 percent methanol.

As can be seen, the 50:50 ABS/Acetal blend has chemical resistance at least comparable to the pure acetal material whereas the pure ABS ingredient is severely degraded by the indicated solvent solution.

Example 5

In this example, 50:50 and 75:25 weight ratio ABS/Acetal blend compositions are tested for creep resistance relative to that of the individual blend components for times exceeding 1000 hours. Quite surprisingly, both blend compositions are found to have better creep resistance than the individual components thereof, as seen from the results presented in Table IV.

## Table IV

| Resin | Temp. °C | Initial Stress MPa | Creep (Apparent) Modulus* (MPa) As A Function Of Time | | | |
|---|---|---|---|---|---|---|
| | | | 1 | 10 | 100 | 1000 |
| ABS | 50 | 8.5 | 1100 | 955 | 680 | 425 |
| Acetal | 50 | 9.4 | 920 | 805 | 680 | 620 |
| ABS/Acetal 50:50 | 50 | 8.6 | 1235 | 1100 | 885 | 725 |
| ---------------- | ---------------- | ---------------- | --------- | --------- | --------- | --------- |
| ABS | 29 | 14.6 | 1500 | 1370 | 1140 | 790 |
| Acetal | 29 | 16.4 | 1500 | 1285 | 1050 | 920 |
| ABS/Acetal 75:25 | 29 | 15.2 | 1700 | 1470 | 1245 | 1010 |

*Injection molded tensile test bars (ISO R 527-1966, Specimen 1) Samples conditioned 40 hours at test temperature prior to load application.

Examples 6-13

In these examples, a series of ABS/Acetal blends are prepared and subjected to physical property testing. The results are summarized in Table V along with the results for the individual ABS and Acetal ingredients of said blends.

Table V

| | Pure Acetal | Pure ABS | Example 6 | Example 7 | Example 8 | Example 9 | Example 10 | Example 11 | Example 12 | Example 13 |
|---|---|---|---|---|---|---|---|---|---|---|
| Acetal (Parts by Weight) | 100¹ | | 50¹ | 25¹ | 30² | 20² | 30³ | 20³ | 15² | 50⁵ |
| ABS⁴ (Parts by Weight) | | 100 | 50 | 75 | 70 | 80 | 70 | 80 | 85 | 50 |
| Izod Impact (J/M) ISO 180-1 82 | 80 | 200 | 28 | 55 | 72 | 83 | 32 | 53 | 100 | 55 |
| Tensile Yield/Rupture (MPa)⁶ | 64/58 | 44/37 | 46/42 | 44/37 | 41/34 | 41/34 | 41/37 | 39/33 | 41/35 | 46/43 |
| Elongation Yield/Rupture (Percent)⁶ | 8/37 | 3/30 | 3/8 | 3/14 | 3/57 | 3/35 | 3/6 | 3/15 | 3/10 | 3.5/30 |
| Emod (MPa)⁶ | 3100 | 2000 | 2230 | 2100 | 2040 | 2020 | 2070 | 2000 | 2000 | 2170 |
| Vicat sp (°C) ISO 306-1974 Method A, 120°C/hr. | 163 | 107 | 144 | 111 | 113 | 108 | 113 | 108 | 108 | 152 |

1. BASF Ultraform™ N2320 Acetal Copolymer MFR*= 9.0 (190°C, 2.16kg)
2. Celanese Celcon™M25 Acetal Copolymer MFR = 2.5
3. Celanese Celcon™M270 Acetal Copolymer MFR = 27.0
4. ABS = 72 Percent Styrene, 16 Percent Acrylonitrile and 12 Percent Polybutadiene. Particle size = 1.2 μm. Produced by way of a mass polymerization process.
5. DuPont Delrin™ 100 MFR=2.0
6. ISO R 527-1966 Specimen 1; 100 mm/min. test speed
*MFR=Melt Flow Rate

As can be seen from the results from in Table IV, the polymer blend compositions containing relatively low melt flow rate (MFR)/high molecular weight acetal polymer ingredient are preferable in the sense that they exhibit notably higher ultimate failure properties such as impact or tensile elongation at rupture than do the similar or corresponding compositions employing the relatively higher melt flow rate acetal ingredients.

Example 14

In this example polymer blend compositions are prepared containing varying amounts of glass fiber (Owens Corning 429 YZ) as a reinforcing agent and are tested to determine the Vicat heat distortion characteristics of the resulting compositions. While the presence of the glass fiber ingredient increased the Vicat temperature in all cases, the magnitude of said increase is disproportionately greater in the blended ABS/Acetal formulations than in the individual ABS and Acetal resins alone and this is observed to be particularly noticeable at fiberglass content levels of 20 and 30 weight percent on a total weight basis and at ABS to Acetal weight ratios of from 90:10 to 50:50 (especially from 75:25 to 50:50).

While the present invention has been described and illustrated with reference to particular embodiments and examples thereof, such is not be interpreted as in any way limiting the scope of the instantly claimed invention.

**Claims**

1. A polymer blend composition characterized in that it comprises, per 100 parts by weight of components A and B:-

   A. from 50 to 85 parts by weight of a monovinylidene aromatic copolymer ingredient which is

   1. a non-rubber-modified monovinylidene aromatic copolymer comprising, in polymerised form, from 55 to 99 weight percent, based on the aromatic copolymer, of at least one monovinylidene aromatic monomer and from 1 to 45 weight percent of at least one relatively polar comonomer ingredient; or

   2. a rubber-modified monovinylidene aromatic copolymer comprising, in polymerized form, from 60 to 99 weight percent based on the rubber-modified copolymer, of at least one monovinylidene aromatic copolymer as defined in item A. 1. above and from 1 to 40 weight percent of dispersed particles of a rubbery polymer having a glass transition temperature of $0^\circ$ C or lower; and

   B. from 15 to 50 parts by weight of at least one acetal homopolymer or copolymer.

2. The polymer blend composition of Claim 1 characterized in that the monovinylidene aromatic copolymer is a rubber-modified monovinylidene aromatic copolymer which is a homopolymer of a 1,3-conjugated alkadiene monomer; a copolymer of from 60 to 99 weight percent of a 1,3-conjugated alkadiene monomer with from 1 to 40 weight percent of a mono-ethylenically unsaturated monomer; an ethylene/propylene copolymer rubber; or a rubbery ethylene/propylene/non-conjugated diene copolymer.

3. The polymer blend composition of Claim 2 further characterized in that the rubber-modified monovinylidene aromatic copolymer comprises from 2 to 35 weight percent based on the rubber-modified copolymer, of dispersed particles of a rubbery polymer which is a homopolymer of a 1,3-conjugated alkadiene monomer or a copolymer of from 60 to 99 weight percent of a 1,3-conjugated alkadiene monomer with from 1 to 40 weight percent of a monoethylenically unsaturated monomer.

4. The polymer blend composition of Claim 3 characterized in that said composition comprises, per 100 parts by weight of components A and B:-

   A. from 55 to 85 parts by weight of said rubber-modified monovinylidene aromatic copolymer and

   B. from 15 to 45 parts by weight of said at least one acetal homopolymer or copolymer.

5. The polymer blend composition of Claim 4 characterized in that said composition comprises, per 100 parts by weight of components A and B:-

   A. from 60 to 85 parts by weight of said rubber-modified monovinylidene aromatic copolymer and

   B. from 15 to 40 parts by weight of said at least one acetal homopolymer or copolymer.

6. The polymer blend composition of Claim 5 characterized in that said composition comprises, per 100 parts by weight of components A and B:-

   A. from 65 to 85 parts by weight of said rubber-modified monovinylidene aromatic copolymer and

   B. from 15 to 35 parts by weight of said acetal homopolymer or copolymer.

7. The polymer blend composition of any one of Claims 2 to 6, characterized in that the rubber-modified monovinylidene aromatic copolymer comprises from 3 to 30 weight percent of the dispersed rubbery polymer particles.

8. The polymer blend composition of Claim 7, characterized in that the rubber-modified monovinylidene aromatic copolymer comprises from 5 to 25 weight percent of the dispersed rubbery polymer particles.

9. The polymer blend composition of any one of the preceding Claims characterized in that said composition further comprises from 5 to 80 weight percent, based on the total composition, of a particulate or fibrous inorganic filler or reinforcing ingredient.

10. The polymer blend composition of Claim 9 characterized in that the inorganic filler or reinforcing ingredient constitutes from 20 to 50 weight percent of said composition.

11. The polymer blend composition of Claim 10 further characterized in that the inorganic filler or reinforcing ingredient is glass fibers.

12. The polymer blend composition of any one of the preceding Claims characterized in that said composition further comprises from 0.01 to 5 weight percent, based on the total composition, of one or more U.V. stabilizers.

13. The polymer blend composition of Claim 12 further characterized in that said composition comprises, from 0.01 to 5 weight percent based on the total composition of an antioxidant.

14. The polymer blend composition of Claim 13 further characterized in that said composition comprises, from 0.1 to 1.0 weight percent, based on the total composition, of one or more sterically hindered amine and/or ester functional group-containing U.V. stabilizers or one or more substituted benzo-triazole U.V. stabilizers, and from 0.1 to 1.0 weight percent of one or more para-hydroxyphenyl propionic acid ester antioxidants.

15. The polymer blend composition of any one of the preceding Claims further characterized in that the relatively polar monomer ingredient of the monovinylidene aromatic copolymer is an ethylenically unsaturated nitrile, an ethylenically unsaturated anhydride, an ethylenically unsaturated amide, an ester of an ethylenically unsaturated carboxylic acid or an ethylenically unsaturated dicarboxylic acid imide.

16. A process for preparing a polymer blend composition comprising a monovinylidene aromatic copolymer and an acetal homopolymer or copolymer, which process comprises dry blending in particulate form and subsequently melt compounding at a temperature not exceeding 240°C a polymer blend which comprises, per 100 parts by weight of components A, and B:
   A. from 50 to 85 parts by weight of a monovinylidene aromatic copolymer ingredient which is
      1. a non-rubber-modified monovinylidene aromatic copolymer comprising, in polymerised form, from 55 to 99 weight percent, based on the aromatic copolymer, of at least one monovinylidene aromatic monomer and from 1 to 45 weight percent of at least one relatively polar comonomer ingredient; or
      2. a rubber-modified monovinylidene aromatic copolymer comprising, in polymerized form, from 60 to 99 weight percent based on the rubber-modified copolymer, of at least one monovinylidene aromatic copolymer as defined in item A. 1. above and from 1 to 40 weight percent of dispersed particles of a rubbery polymer having a glass transition temperature of 0°C or lower; and
   B. from 15 to 50 parts by weight of at least one acetal homopolymer or copolymer.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A,D | GB-A-1311305 (FARBWERKE HOECHST AKTIENGESELLSCHAFT)<br>* claims * | 1 | C08L25/08<br>C08L55/02<br>//(C08L25/08,<br>59:02) (C08L55<br>/02,59:02) |
| A,D | US-A-4296216 (H. SAKANO ET AL.)<br>* claim * | 1 | |
| A,D | US-A-4639488 (W. SCHUETTE ET AL.)<br>* claims * | 1 | |
| X | DATABASE WPI, no. 76-37255, Derwent Publications Ltd, London, GB; & JP-A-51 039 746 (MITSUI<br>* abstract * | 1-16 | |
| X | DATABASE WPIL, no. 84-285400, Derwent Publications Ltd, London, GB; & JP-A-59 176 342 (JAPAN SYNTHETIC RUBBER) 05-10-1984<br>* abstract * | 1-16 | |

TECHNICAL FIELDS SEARCHED (Int. Cl.5)

C08L

The present search report has been drawn up for all claims

| Place of search | Date of completion of the search | Examiner |
|---|---|---|
| THE HAGUE | 08 MAY 1991 | HOFFMANN K.W. |